# EUROPÄISCHE PATENTANMELDUNG

(11) **EP 0 903 672 A2**
(43) Veröffentlichungstag der Anmeldung: **24.03.1999**
(21) Anmeldenummer: 98114026.2
(22) Anmeldetag: 27.07.1998
(51) Int. Cl.: G06F 15/80

(54) **Zellularer Automat und dessen Verwendung**

(30) Priorität: 19.09.1997 DE 19741209
(71) Anmelder: SIEMENS AKTIENGESELLSCHAFT, 80333 München (DE)
(72) Erfinder: Weber, Werner, 80637 München (DE); Jung, Stefan, 80469 München (DE); Thewes, Roland, 82194 Gröbenzell (DE); Luck, Adreas, 81737 München (DE)

(57) **Zusammenfassung**

Ein zellularer Automat besteht aus einer Vielzahl von matrixförmig angeordneten Rechenwerken mit relativ begrenzter Funktionalität, wobei diese Rechenwerke durch ein vereinfachtes Neuron bestimmt werden mit von Nachbarzellen angesteuerten Eingängen, einer schwellenwertbildenden Funktion und Ausgängen, die mit Eingängen von Nachbarzellen verbunden sind. Solche zellulären Automaten können bevorzugt zur Bildverarbeitung (beispielsweise Kontrasterhöhung oder Kantendetektion) mit hoher Rechengeschwindigkeit verwendet werden.

## Beschreibung

Die Erfindung betrifft eine Anordnung mit einer Mehrzahl von Zellen, die beispielsweise in Matrixform angeordnet sind und Rechenwerke mit sehr begrenzter Funktionalität darstellen. Diese Zellen tauschen dabei typischerweise mit ihren direkten oder nahen Nachbarzellen Informationen aus. In vielen Anwendungsfällen kann die Funktion einer solchen Zelle durch ein vereinfachtes Neuron beschrieben werden, mit einer Anzahl Eingänge, die von den Nachbarzellen angesteuert werden, einer schwellwertbildenden Funktion und einem Ausgang, der mit Nachbarzellen verbunden ist. Zellulare Automaten können zum Beispiel zur Bildvorverarbeitung mit Funktionen wie Kontrasterhöhung, Kantendetektion usw. dienen.

Wegen des großen Flächenbedarfs für ein einzelnes Neuron, wird heute oftmals nur ein einziges Neuron in Hardware realisiert. Die Zwischenergebnisse einer von diesem Element durchgeführten Bewertung in einem großen Speicher zwischengespeichert und nach Bedarf aufgerufen. Die Rechenaufgaben des neuronalen Netzes werden also seriell abgearbeitet, wobei das einzeln in Hardware realisierte Neuron nacheinander die Rolle der verschiedenen Zellen annimmt. Diese Vorgehensweise stößt dort auf Grenzen, wo es auf hohe Rechenleistung bzw. hohe Geschwindigkeit ankommt.

Zellulare neuronale Netzwerke mit z. B. einem Feld aus 6x6 als Hardware realisierter Zellen und ihre Verwendung in der Bildverarbeitung sind aus dem Artikel von L. O. Chua, L. Yang, K. R. Krieg, mit dem Titel 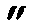 Signal Processing Using Cellular Neural Networks", Journal of VLSI Signal Processing, 3, pp. 25 bis 51, 1991, bekannt.

Aus der internationalen Anmeldung WO 96/42049 ist eine Bewerterschaltung für Schaltungen mit Neuron-MOS-Feldeffekttransistoren bekannt, die die Bewertung durch Ströme und nicht, wie häufig bei anderen Bewerterschaltungen üblich, über Spannungen durchführt, wodurch eine sicherere Bewertung möglich ist.

Die der Erfindung zugrundeliegende Aufgabe besteht nun darin, einen zellularen Automaten mit möglichst geringer Chipfläche und möglichst hoher Rechenleistung bzw. Verarbeltungsgeschwindigkeit anzugeben. Diese Aufgabe wird durch die Merkmale des Patentanspruchs 1 oder 2 gelöst. Die Merkmale des Patentanspruch 3 betreffen dessen bevorzugte Verwendung.

Ein Ausführungsbeispiel der Erfindung ist in den Zeichnungen dargestellt und wird im folgenden näher erläutert. Dabei zeigt
- Figur 1: ein Prinzipschaltbild eines zellulären Automaten,
- Figur 2: ein Schaltbild einer Zelle des zellulären Automaten und
- Figur 3: ein Schaltbild eines zu einem Teil von Figur 2 alternativen Schaltungsteils.

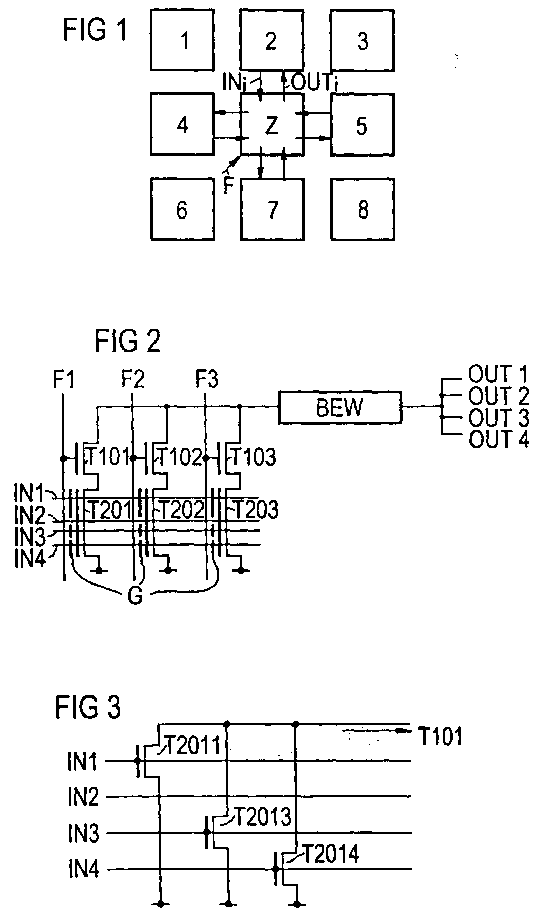

In Figur 1 ist ein Prinzipschaltbild mit einem Teil eines zellularen Automaten dargestellt, der eine in einer Matrix zentral angeordnete Zelle Z und unmittelbar Nachbarzellen 1 ... 8 aufweist. Bei diesem zellularen Automaten werden Eingangssignale INi nur von den unmittelbaren Nachbarzellen der selben Zeile oder der selben Spalte empfangen und Ausgangssignale OUTi nur an entsprechende unmittelbare Nachbarzellen geliefert. Alle diese Zellen werden gemeinsam mit Funktionssignalen F gesteuert.

Die Eingangssignale INi und Ausgangssignale OUTi des zellularen Automaten können prinzipiell den Zellen parallel zugeführt bzw. aus den Zellen parallel abgeführt werden. Eine weitere jedoch wesentlich flächensparendere Möglichkeit besteht darin, daß die Ausgangsinformation einer Zelle durch jeweilige Nachbarzellen, beispielsweise zeilen- oder spaltenweise bis zum Rand der Matrix durchgereicht wird, wo dann die Eingänge bzw. Ausgänge gleichzeitig die Eingänge und Ausgänge des zellularen Automaten darstellen.

In Figur 2 ist eine solche Zelle Z mit Multi-Input Floating Gate- Transistoren (MIFG-Transistoren) T201 ... T203 dargestellt. Solche Transistoren weisen allgemein neben einem Floating Gate sogenannte Koppelgates G auf. Hier ist jeweils ein solches Koppelgate mit einem von vier Eingängen IN1 ... IN4 der Zelle Z verbunden, wobei das jeweilige Koppelgate nach dem gewünschten Gewichtungsfaktor eines jeweiligen Eingangs in der Fläche entsprechend dimensioniert ist. Die Transistoren T201 ... T203 unterscheiden sich hinsichtlich der Flächen der Koppelgates derart, daß durch jeden der hier drei parallel geschalteten MIFG-Transistoren jeweils eine andere Gewichtung der hier vier Eingänge IN1 ... IN4 erfolgt. Der Transistor T201 ist über einen Schalttransitor T101 mit einem Eingang einer Bewerterschaltung BEW verbunden, wobei das Gate des Schalttransistors T101 mit einem Funktionseingang F1 der Zelle beschaltet ist. Entsprechend ist der Transistor T202 über einen Schalttransistor T102 und der Transistor T203 über einen Schalttransistor T103 mit dem Eingang der Bewerterschaltung BEW verbunden, wobei das Gate des Transistors T102 mit einem Funktionseingang F2 und das Gate des Transistors T101 mit einem Funktionseingang F3 beschaltet sind. Der Ausgang der Bewerterschaltung BEW liefert ein gleiches Signal für die Zellenausgänge OUT1 ... OUT4.

Als Bewerterschaltung kann beispielsweise eine Bewerterschaltung mit zwei kreuzgekoppelten CMOS-Inverter-Stufen, wie sie beispielsweise aus der eingangs genannten internationalen Anmeldeschrift WO 96/42049 angegeben ist, Verwendung finden.

In Figur 3 ist eine Alternative zur Lösung mit den MIFG-Transistoren dargestellt, wobei ein MIFG-Transistor durch eine Parallelschaltung aus gewöhnlichen MOS-Transistoren ersetzt ist und die Anzahl der gewöhnlichen Transistoren in der Parallelschaltung der Anzahl der Koppelgates entspricht. Eine entsprechende Ersetzung anderer einzelner MIFG-Transistoren bis hin zur Ersetzung aller MIFG-Transistoren ist ebenfalls möglich. Der Transistor T201 kann hier durch eine Parallelschaltung von drei MOS-Transistoren T2011, T2013 und T2014 ersetzt werden, wobei die Kanalweiten dieser Transistoren den mit den jeweiligen Gates verbundenen Eingängen ein entsprechendes Gewicht verleihen.

Für beide Alternativen bedeutet eine Gewichtung mit Null, daß der mit Null gewichtete Eingang bei dem betreffenden MIFG-Transistor nicht mit dem Koppelgate bzw. nicht mit dem Gate des Transistors in der den MIFG-Transistor ersetzenden Schaltung verbunden ist. Weiterhin können negative Gewichte, wie sie beispielsweise in der Bildverarbeitung vorkommen, durch Eingänge auf der Referenzseite der Bewertungsschaltung realisiert werden, da diese ja praktisch eine Differenzbildung zwischen den Querströmen einer regulären Seite und einer Referenzseite durchführt.

Derartige zellulare Automaten können vorteilhafterweise in der Bildverarbeitung zur Kontrasterhöhung, Kantendetektion oder ähnlichem verwendet werden, wobei infolge der Einfachheit der Schaltung einer einzelnen Zelle idealerweise für jedes Bildelement (Pixel) eine eigene Zelle vorhanden ist. Mit modernen sehr hochintegrierten Schaltungen sind Automaten mit einige hundert mal einige hundert Pixel bzw. Zellen möglich.

## Patentansprüche

1. Zellularer Automat mit einer Vielzahl von matrixförmig angeordneten Zellen (1 ... 8, Z) die über Eingänge (INi), Ausgänge (OUTi) und allen Zellen gemeinsame Funktionseingänge (F) verfügen, wobei die Eingänge entweder Eingänge des Automaten darstellen oder mit Ausgängen von Nachbarzellen (1 ... 8) verbunden sind und wobei die Ausgänge entweder Ausgänge des Automaten darstellen oder mit Eingängen der Nachbarzellen verbunden sind,
bei dem die Eingänge (IN1 ... IN4) einer jeweiligen Zelle (Z) mit Gates von Multi-Input Floating Gate-Transistoren (T201 ... T203) verbunden sind, wobei sich, zur Erzielung einer für jede Funktion unterschiedlichen Gewichtung der Eingänge, diese Transistoren in der Fläche mindestens einer Gateelektrode unterscheiden, und
bei dem jeweils ein Ausgang eines solchen Transistors über einen MOS-Schalttransistor (T101 ... T103) in Abhängigkeit eines jeweiligen Funktionssignals (F1 ... F3) auf einen Eingang einer Bewertungsschaltung (BED) durchschaltbar ist, deren Ausgang mit den Ausgängen (OUT1 ... OUT4) der jeweiligen Zelle verbunden ist.

2. Zellularer Automat nach Anspruch 1,
bei dem mindestens ein Multi-Input Floating Gate-Transistor (T201) durch eine Mehrzahl von parallel geschalteten MOS-Transistoren (T2011 ... T2014) ersetzt ist, wobei jeweils ein mit einem Koppelgate verbundener Eingang beim Multi-Input Floating Gate-Transistor mit einem Gate von einem der parallelgeschalteten MOS-Transistoren verbunden ist.

3. Verwendung eines zellularen Automaten nach einem der vorhergehenden Ansprüche,
bei der der zellulare Automat zur Verarbeitung von Bildinformationen derart verwendet wird, daß für jedes Bildelement eine eigene Zelle vorhanden ist.
